# EUROPEAN PATENT APPLICATION

(11) **EP 3 399 125 A1**
(43) Date of publication of application: **07.11.2018**
(21) Application number: 18164342.0
(22) Date of filing: 27.03.2018
(51) Int. Cl.: E05B 77/52, E05B 79/20, E05B 83/24

(54) **VEHICLE COVER RELEASE INTERLOCK SYSTEM**

(30) Priority: 05.05.2017 US 201715587868
(71) Applicant: KA Group AG, 8001 Zurich (CH)
(72) Inventor: Gregory Thomas, Mason, Staffordshire, DE 14 2SY (GB)
(74) Representative: Uexküll & Stolberg

(57) **Abstract**

A vehicle cover release interlock system includes a latch mechanism and a lock device. The latch mechanism is adapted to move from a latched position to an unlatched position upon actuation of a lever of the latch mechanism. The lock device includes a Bowden cable that extends from the latch mechanism. The Bowden cable is coupled to the lever when the lock device is in a lock position preventing actuation of the lever, and is uncoupled from the lever when the lock device is in an unlock position.

## Description

### INTRODUCTION

The subject invention relates to a cover release interlock system of a vehicle, and more particularly, to a concealed lock device of the cover release interlock system.

A cover release system for a vehicle, such as a hood release system, may include various security measures to prevent unwanted individuals from accessing engine compartments. One known security measure is the introduction of a handle located within a driver's compartment. Such handles must be manually pulled in order to "pop" the engine hood. Once popped, an individual may gain access to a lever of a latch mechanism. When manually actuating the lever, the latch mechanism releases the hood permitting full access to the engine compartment. Unfortunately, access to the operator compartment may provide an unwanted individual access to the engine compartment. Further security measures are desirable to limit access to various vehicle compartments, while maintaining or improving upon a degree of access convenience.

### SUMMARY

A vehicle according to one, non-limiting, embodiment of the present disclosure includes a structure, a cover, a door, a latch mechanism, and a lock device. The structure defines first and second compartments. The cover is engaged to the structure, and is constructed and arranged to move between a closed position and an open position for access to the first compartment. The door is engaged to the structure, and is constructed an arranged to move between a closed state and an open state for access to the second compartment. The latch mechanism is mounted between the structure and the cover, and is constructed and arranged to move between an unlatched position and a latched position for securing the cover in the closed position. The lock device extends between the latch mechanism and the door, and is constructed and arranged to be in a lock position when the door is in the closed state, and an unlock position when the door is in the open state. The latch mechanism is locked when in the latched position and the door is in the closed state via the lock device, and is unlocked when in the latched position and the door is in the open state via the lock device.

Additionally to the foregoing embodiment, the door is an operator door.

In the alternative or additionally thereto, in the foregoing embodiment, the cover is an engine hood.

In the alternative or additionally thereto, in the foregoing embodiment, the first compartment is a storage compartment.

In the alternative or additionally thereto, in the foregoing embodiment, the lock device is an elongated, push-pull, lock device constructed and arranged to actuate mechanically.

In the alternative or additionally thereto, in the foregoing embodiment, the lock device includes a Bowden cable engaged between the latch mechanism and the door.

In the alternative or additionally thereto, in the foregoing embodiment, the lock device includes a resilient member engaged between the structure and the Bowden cable for biasing the Bowden cable toward the door and away from the latch mechanism.

In the alternative or additionally thereto, in the foregoing embodiment, the lock device includes a button engaged to the Bowden cable and the support structure, and is in biased contact with the door when the door is in the closed state and is spaced from the door when the door is in the open state.

In the alternative or additionally thereto, in the foregoing embodiment, the button is concealed when the door is in the closed state.

In the alternative or additionally thereto, in the foregoing embodiment, the button is supported by and projects through a door jamb of the support structure.

In the alternative or additionally thereto, in the foregoing embodiment, the vehicle includes an access device configured to be manually actuated from within the second compartment to release the cover from the closed position and place the cover in a partially open position, wherein the latch mechanism includes a lever that is inaccessible when the cover is in the closed position and is accessible when the cover is in the partially open position, and manual actuation of the lever releases the cover from the partially open position to move the cover toward the open position.

In the alternative or additionally thereto, in the foregoing embodiment, the lock device obstructs motion of the lever when in the lock position.

In the alternative or additionally thereto, in the foregoing embodiment, the lock device includes a Bowden cable operatively coupled between the lever and the door.

In the alternative or additionally thereto, in the foregoing embodiment, the lock device includes a spring engaged between the structure and the Bowden cable for biasing the Bowden cable toward the door and away from the lever.

In the alternative or additionally thereto, in the foregoing embodiment, the lock device includes a lock pin in contact with the Bowden cable, and in contact with the lever when in the lock position and spaced from the lever when in the unlock position.

In the alternative or additionally thereto, in the foregoing embodiment, the spring is compressed between the structure and the lock pin.

An engine hood release interlock system according to another, non-limiting, embodiment includes a lock device and a latch mechanism having a lever. The latch mechanism is constructed and arranged to move from a latched position to an unlatched position upon actuation of the lever. The lock device includes a Bowden cable that extends from the latch mechanism. The Bowden cable is coupled to the lever when the lock device is in a lock position, thereby preventing actuation of the lever. The Bowden cable is uncoupled from the lever when the lock device is in an unlock position.

Additionally to the foregoing embodiment, the engine hood release interlock system includes an access device coupled to a secondary latch of the latch mechanism and configured to release the secondary latch, wherein the lever is part of a primary latch of the latch mechanism configured to release the primary latch.

In the alternative or additionally thereto, in the foregoing embodiment, the lock device includes a lock pin in contact with the Bowden cable and in obstructing contact with the lever when the lock device is in the lock position and is spaced from the lever when the lock device is in the unlock position.

In the alternative or additionally thereto, in the foregoing embodiment, the Bowden cable is operatively connected to and extends between the lock pin and a button of the lock device, and wherein the button is depressed when the lock device is in the lock position and is extended when the lock device is in the unlock position.

The above features and advantages and other features and advantages of the disclosure are readily apparent from the following detailed description when taken in connection with the accompanying drawings.

### BRIEF DESCRIPTION OF THE DRAWINGS

Other features, advantages and details appear, by way of example only, in the following detailed description of embodiments, the detailed description referring to the drawings in which:
FIG. 1 is a schematic of a cover release interlock system for a vehicle as one, non-limiting, embodiment in accordance with the present disclosure;
FIG. 2 is an expanded perspective view of a lock device of the cover release interlock system;
FIG. 3 is a cross section of the lock device illustrated in a lock position with a door of the vehicle in a closed state; and
FIG. 4 is a cross section of the lock device illustrated in an open position with the door in an open state.

### DETAILED DESCRIPTION

The following description is merely exemplary in nature and is not intended to limit the present disclosure, its application or uses. It should be understood that throughout the drawings, corresponding reference numerals indicate like or corresponding parts and features.

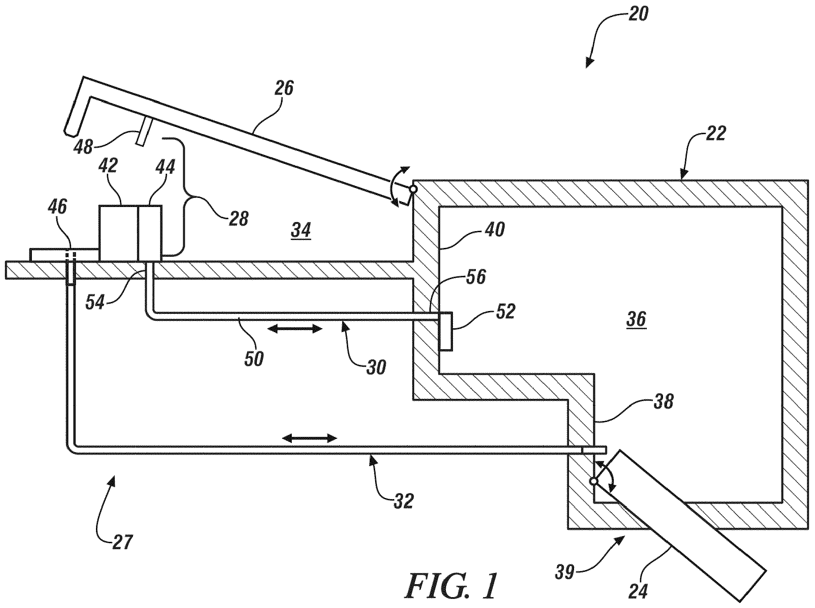

Referring to FIG. 1, a vehicle 20 may include a structure 22, a door 24, a cover 26, and a cover release interlock system 27 that may be generally concealed. The cover release interlock system 27 may include a latch mechanism 28, an access device 30, and a lock device 32. The structure 22 may include boundaries that define first and second compartments 34, 36. The cover 26 is operably, and/or pivotally, attached to the structure 22, moves between fully closed and open positions (i.e., depicted in the open position), and provides access to the first compartment 34 when in the open position. In one non-limiting example, the cover 26 may be a hood and the first compartment 34 may be an engine compartment. However, it is contemplated and understood that the cover 26 may be any vehicle cover capable of restricting and providing access to any variety of compartments including, for example, a cargo compartment or trunk space.

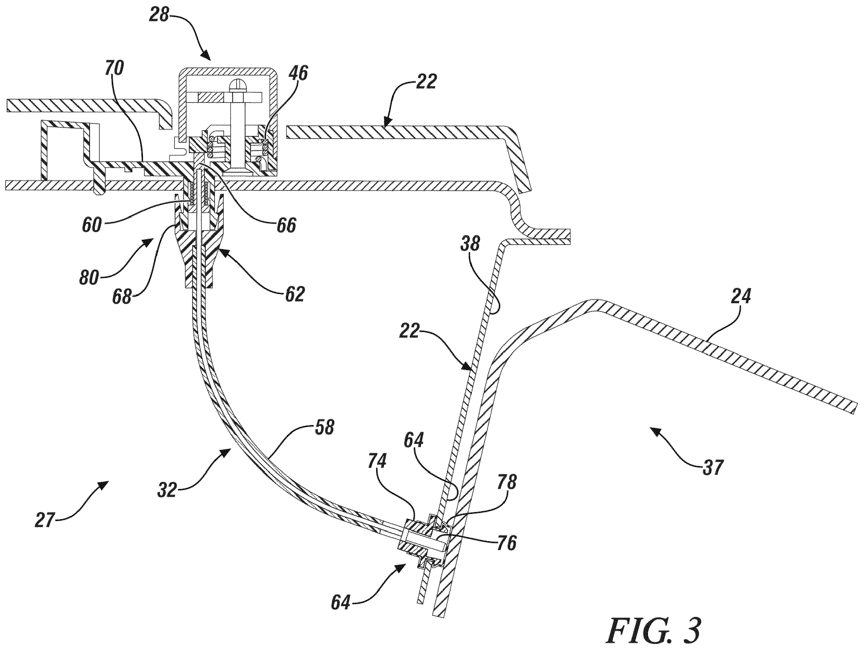

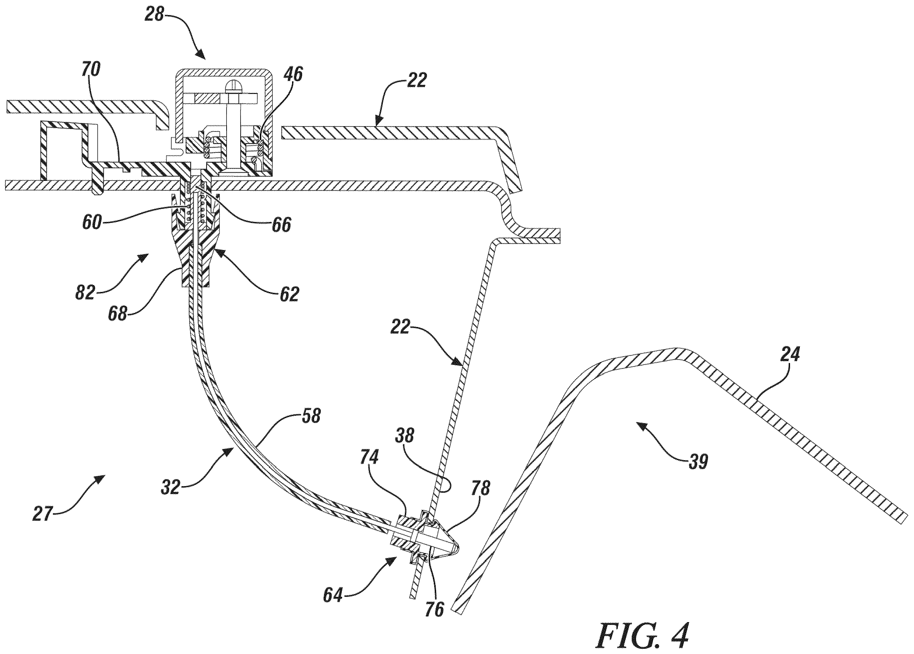

The door 24 may be operably, and/or pivotally, attached to a door jamb 38 of the structure 22, and moves between a closed state 37 (see FIG. 3) and an open state 39 (see FIGS. 1 and 4), and provides access to the second compartment 36 when in the open state 39. In one non-limiting example, the door may be an operator door (e.g., driver's side door) and the second compartment 36 may be an operator compartment (e.g., cab compartment). The structure 22 may further include a dash 40 that is exposed within the second compartment 36. Although not specifically illustrated, a steering wheel of the vehicle 20 may generally project outward from the dash 40 and toward the operator of the vehicle when in the operator compartment 36. The dash 40 may further support various vehicle controls and instrumentation for operator interface as is known by one skilled in the art.

The latch mechanism 28 is generally supported by, and is disposed between, the structure 22 and the cover 26, and may include a primary latch 42, a secondary latch 44, a lever 46, and a striker 48. In one example, the striker 48 may be attached to, and may project downward from, the cover 26 for releasable engagement to the primary and secondary latches 42, 44. The primary and secondary latches 42, 44 may be attached to the structure 22. The lever 46 may be operatively engaged to the primary latch 42. The access device 30 is operably coupled to the secondary latch. The lock device 32 may be operably coupled to the lever 46, or may be operably coupled to a component of the primary latch 42 adapted to move in unison with the lever. One non-limiting example of a latch mechanism is taught in U.S. Patent 5,853,060, titled: Automotive Vehicle Hood Latch Release System, issued: December 29, 1998, and incorporated herein in its entirety.

The access device 30 may include an elongated member or cable 50 and a release handle 52. The cable 50 may include opposite end portions 54, 56, with the first end portion 54 coupled to the secondary latch 44, and the opposite, second end portion 56 attached to the release handle 52. The second end portion 56, and/or release handle 52, is supported by, and may project through, the structure 22 and into the second compartment 36 for easy access by the operator. In one embodiment, the handle 52 may be accessible to an operator located in the second compartment 36, and with the door in the closed state 37.

The primary latch 42 of the latch mechanism 28 is adapted to move between a latched position wherein the cover 26 is at least partially closed, and an unlatched position that enables the full opening of the cover 26. Placing the primary latch 42 in the unlatch position may be facilitated by the lever 46 which may be spring-loaded.

When the cover 26 is in the closed position, the lever 46 of the latch mechanism 28 may be concealed by the cover, thus access to the lever 46 by a potential operator is prevented. In operation of the access device 30, and when the cover 26 is in the closed position, the operator may operate, or pull, the release handle 52 causing the secondary latch 44 of the latch mechanism 28 to release the striker 48. The release of the striker 48 from the secondary latch 44 causes the cover 26 to move (or otherwise be moved) from the closed position and into a partially open position for user access to the lever 46, but not complete access to the first compartment 34. The contact or catch of the primary latch 42 with the striker 48, when the cover 26 is in the partially open position, prevents the cover 26 from moving into the fully open position (i.e., complete disengagement of the striker 48 from both latches 42, 44).

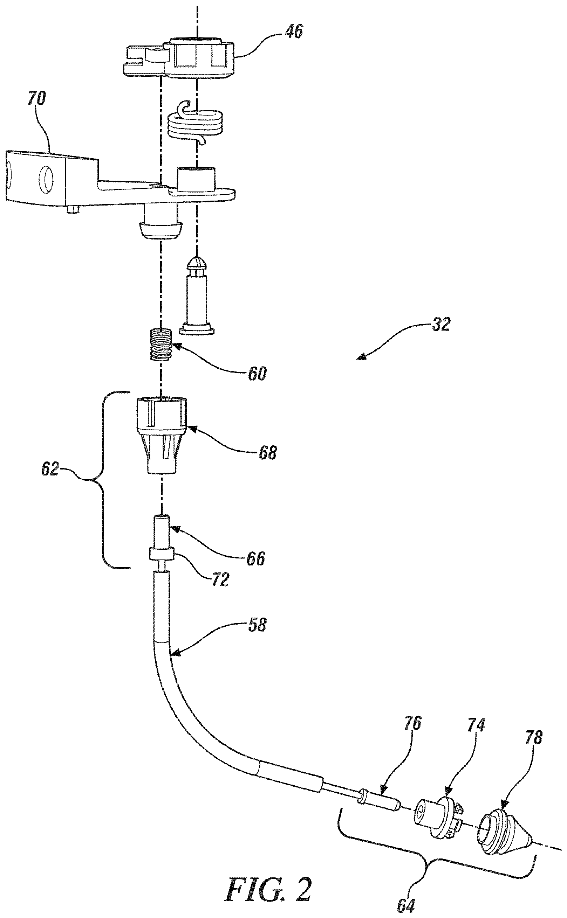

Referring to FIGS. 1 and 2, the lock device 32 may be an elongated, push-pull lock device including a mechanical transfer conduit or cable 58, a resilient biasing member 60 that may be a spring, and opposite end components 62, 64 that may be, or may not be coupled to, opposite ends of the cable 58. The first end component 62 is adapted to contact, or otherwise obstruct, motion of the lever 46 of the primary latch 42 when the door 24 is in the closed state 37. The second end component 64 may generally be a depressible button that may be supported by, and projects through, a door jamb 38 of the structure 22. In one, non-limiting example, the cable 58 may be a Bowden cable.

Referring to FIG. 2, the first end component 62 of the lock device 32 may include a lock pin 66 and a fitting 68. The fitting 68 attaches to a bracket 70 of the latch mechanism 28 that may be fastened to the structure 22. The lock pin 66 may be secured to, or abuts, an end of the cable 58 and is adapted to ride within the fitting 68 along an axis that may be common to the pin and the cable 58. The spring 60 may be a coiled spring concentrically disposed about the lock pin 66 with the fitting 68, and adapted to be axially compressed between a radially enlarged portion or head 72 of the lock pin 66 and the bracket 70.

The button 64 of the lock device 32 may include a fitting 74, a shuttle 76 and a rubber-like, resilient, boot 78 that at least prevents dirt ingress between the fitting 74 and the shuttle 76. The fitting 74 may be attached to the door jamb 38, and the shuttle 76 may be attached to an end portion of the cable 58. In operation, the shuttle 76 may axially slide within the fitting 74, thus extending from and retracting into the door jamb 38.

Referring to FIGS. 3 and 4, and in operation of the lock device 32, when the door 24 is in the closed state 37, the lock device 32 may be in a lock position 80 (see FIG. 3). That is, the button 64 is in biased contact with the door 24 and may be generally retracted into the door jamb 38. In this state, the shuttle 76 of the button 64 presses upon an end of the cable 58, which in turn, presses an opposite end of the cable 58 presses upon the lock pin 66 and against the biasing force of the spring 60. In turn, the lock pin 66 is generally projected into the lever 46, or otherwise obstructs the lever, thus preventing release of the primary latch 42 of the latch mechanism 28.

When an operator of the vehicle 20 is moving the door 24 from the closed state 37 and toward the open state 39, the lock device 32 moves from the lock position 80 (see FIG. 3) and toward an unlock position 82 (see FIG. 4). That is, the spring 60, which exerts a biasing force against the lock pin 66, moves the lock pin 66 out of, or away from, the lever 46. The cable 58 is thus pushed axially by the lock pin 66 and against the shuttle 76, projecting the shuttle 76 through the door jamb 38. With continued motion of the door 24 toward the open state 39, the door 24 may no longer contact the button 64, and the button is fully projected (i.e., extended) through the door jamb 38, while the lock pin 66 is fully retracted out of the lever 46.

With the door 24 in the open state 39 and the lock device 32 in the unlock position 82, the lever 46 is accessible by the operator and may be manually actuated by the operator to release the primary latch 42 from the striker 48. Upon this release, the cover 26 may be moved from the partially open position and toward the fully open position for access to the first compartment 34.

With the door 24 in the closed state 37, the lock device 32 is in the lock position 80. If an operator is in the second compartment 36 with the door 24 closed, the operator may be capable of pulling or actuating the release handle 52 of the access device 30. When the release handle 52 is actuated, the cover 26 may move from the closed position and into the partially open position. However, because the door 24 is in the closed state 37 the lever 46 remains obstructed and an operator may not fully open the cover 26 to gain access to the first compartment 34. Also with the door 24 closed, the button 64 may be inaccessible and concealed between the door jamb 38 and the door 24.

It is further contemplated and understood that the cover release interlock system 27 may not include the access device 30. For example, the cover 26 (e.g., engine hood) may not have a partially open position and the lever 46 may not be concealed when the cover is in the closed position. However, the lock device 32 may still prevent actuation of the lever 46 when the door 24 is in the closed state 37. It is further understood that the lever 46 may be spring loaded, and may include other mechanical components that incur motion in unison such that preventing motion of any one component prevents actuation of the lever 46.

Advantages and benefits of the present disclosure include a means of preventing the use of an easily accessible handle to open a vehicle cover when a door is closed. This interlocking feature may further prevent or limit unwanted access to vehicle compartments.

While the above disclosure has been described with reference to exemplary embodiments, it will be understood by those skilled in the art that various changes may be made and equivalents may be substituted for elements thereof without departing from its scope. In addition, many modifications may be made to adapt a particular situation or material to the teachings of the disclosure without departing from the essential scope thereof. Therefore, it is intended that the disclosure not be limited to the particular embodiments disclosed, but will include all embodiments falling within the scope of the present disclosure.

## Claims

1. A vehicle comprising:
a structure defining first and second compartments;
a cover engaged to the structure and constructed and arranged to move between a closed position and an open position for access to the first compartment;
a door engaged to the structure and constructed and arranged to move between a closed state and an open state for access to the second compartment;
a latch mechanism mounted between the structure and the cover, and constructed and arranged to move between an unlatched position and a latched position for securing the cover in the closed position; and
a lock device extending between the latch mechanism and the door, and constructed and arranged to be in a lock position when the door is in the closed state and an unlocked position when the door is in the open state, wherein the latch mechanism is locked when in the latched position and the door is in the closed state via the lock device, and is unlocked when in the latched position and the door is in the open state via the lock device.

2. The vehicle set forth in claim 1, wherein the door is an operator door, and wherein the cover is an engine hood.

3. The vehicle set forth in claim 1 or 2, wherein the lock device is an elongated, push-pull, lock device constructed and arranged to actuate mechanically.

4. The vehicle set forth in claim 3, wherein the lock device includes a Bowden cable engaged between the latch mechanism and the door, and wherein the lock device includes a resilient member engaged between the structure and the Bowden cable for biasing the Bowden cable toward the door and away from the latch mechanism.

5. The vehicle set forth in claim 4, wherein the lock device includes a button engaged to the Bowden cable and the support structure, and is in biased contact with the door when the door is in the closed state and is spaced from the door when the door is in the open state and wherein the button is concealed when the door is in the closed state.

6. The vehicle set forth in claim 5, wherein the button is supported by and projects through a door jamb of the support structure.

7. The vehicle set forth in claim 1, further comprising:
an access device configured to be manually actuated from within the second compartment to release the cover from the closed position and place the cover in a partially open position, wherein the latch mechanism includes a lever that is inaccessible when the cover is in the closed position and is accessible when the cover is in the partially open position, and manual actuation of the lever releases the cover from the partially open position to move the cover toward the open position.

8. The vehicle set forth in claim 7, wherein the lock device obstructs motion of the lever when in the lock position, and wherein the lock device includes a Bowden cable operatively coupled between the lever and the door.

9. The vehicle set forth in claim 4, wherein the lock device includes a spring engaged between the structure and the Bowden cable for biasing the Bowden cable toward the door and away from the lever.

10. The vehicle set forth in claim 9, wherein the lock device includes a lock pin in contact with the Bowden cable, and in contact with the lever when in the lock position and spaced from the lever when in the unlock position.

11. The vehicle set forth in claim 10, wherein the spring is compressed between the structure and the lock pin.

12. An engine hood release interlock system for a vehicle comprising:
a latch mechanism including a lever, wherein the latch mechanism is constructed and arranged to move from a latched position to an unlatched position upon actuation of the lever; and
a lock device including a Bowden cable extending from the latch mechanism, wherein the Bowden cable is coupled to the lever when the lock device is in a lock position preventing actuation of the lever, and is uncoupled from the lever when the lock device is in an unlock position.

13. The engine hood release interlock system set forth in claim 12, further comprising:
an access device coupled to a secondary latch of the latch mechanism and configured to release the secondary latch, wherein the lever is part of a primary latch of the latch mechanism configured to release the primary latch.

14. The engine hood release interlock system set forth in claim 12, wherein the lock device includes a lock pin in contact with the Bowden cable and in obstructing contact with the lever when the lock device is in the lock position and is spaced from the lever when the lock device is in the unlock position.

15. The engine hood release interlock system set forth in claim 14, wherein the Bowden cable is operatively connected to and extends between the lock pin and a button of the lock device, and wherein the button is depressed when the lock device is in the lock position and is extended when the lock device is in the unlock position.
